# EUROPÄISCHE PATENTSCHRIFT

(11) **EP 3 740 313 B1**
(45) Veröffentlichungstag und Bekanntmachung des Hinweises auf die Patenterteilung: **09.02.2022**
(21) Anmeldenummer: 18826658.9
(22) Anmeldetag: 20.12.2018
(51) Int. Cl.: G01N 35/10, B01L 3/00

(54) **VERFAHREN ZUM BEREITSTELLEN EINER LÖSUNG DER SUBSTANZ IN EINER MIKROFLUIDISCHEN VORRICHTUNG**
METHOD FOR PROVIDING A SOLUTION OF THE SUBSTANCE IN A MICROFLUIDIC DEVICE
PROCÉDÉ SERVANT À FOURNIR UNE SOLUTION DE LA SUBSTANCE DANS UN DISPOSITIF MICROFLUIDIQUE

(30) Priorität: 15.01.2018 DE 102018200520
(43) Veröffentlichungstag der Anmeldung: 25.11.2020
(73) Patentinhaber: Robert Bosch GmbH, 70442 Stuttgart (DE)
(72) Erfinder: FRANK, Tino, 6003 Luzern (CH)
(86) Internationale Anmeldenummer: PCT/EP2018/086162
(87) Internationale Veröffentlichungsnummer: WO 2019/137783

(56) Entgegenhaltungen:
- DE-B3-102004 021 821
- US-A1- 2016 045 843

## Beschreibung

### Stand der Technik

Mikrofluidische Systeme erlauben das Analysieren von kleinen Probenmengen mit einer hohen Sensitivität. Automation, Miniaturisierung und Parallelisierung von Verfahren erlauben dabei eine Reduktion von händischen Schritten und können somit dazu beitragen, Fehler zu vermeiden. Miniaturisierung von mikrofluidischen Systemen erlaubt zudem Laborprozesse direkt bei der Probe durchzuführen, so dass keine allgemeine Laborumgebung benötigt wird. Stattdessen kann ein Prozess auf einen fluidischen Chip reduziert werden. Daher können mikrofluidische Anwendungen auch als "Lab-on-Chip" bezeichnet werden. Dieses Einsatzgebiet der Mikrofluidik wird auch als "Point-of-care (PoC)" bezeichnet.

Eine Herausforderung bei PoC-Systemen sind insbesondere das Aufbewahren und das Zuführen der zu gebrauchenden Chemikalien. Aus dem Dokument DE 10 2004 021821 B3 ist beispielsweise ein Verfahren zum Bereitstellen einer Lösung einer Substanz in einer mikrofluidischen Vorrichtung bekannt.

### Offenbarung der Erfindung

Hier wird ein besonders vorteilhaftes Verfahren zum Bereitstellen einer Lösung der Substanz in einer mikrofluidischen Vorrichtung vorgestellt. Die abhängigen Ansprüche geben besonders vorteilhafte Weiterbildungen des Verfahrens an. Der Begriff "mikrofluidisch" bezieht sich hier vor allem auf die Größenordnung der mikrofluidischen Vorrichtung. Die mikrofluidische Vorrichtung ist dadurch gekennzeichnet, dass in den darin angeordneten fluidischen Kanälen und Kammern physikalische Phänomene relevant sind, die im Allgemeinen der Mikrotechnik zugeordnet werden. Hierzu zählen beispielsweise Kapillareffekte, Effekte (insbesondere mechanische Effekte) die im Zusammenhang mit Oberflächenspannungen des Fluids stehen. Hinzu zählen weiterhin Effekte wie Thermophorese und Elektrophorese. Diese Phänomene sind in der Mikrofluidik üblicherweise dominant gegenüber Effekten wie der Schwerkraft. Die mikrofluidische Vorrichtung kann auch dadurch gekennzeichnet sein, dass sie zumindest teilweise mit einem schichtweisen Verfahren hergestellt ist und Kanäle zwischen Schichten des Schichtaufbaus angeordnet sind. Der Begriff "mikrofluidisch" kann auch über die Querschnitte innerhalb der Vorrichtung charakterisiert werden, welche zur Führung des Fluids dienen. Üblich sind beispielsweise Querschnitte im Bereich von 100 µm [Mikrometer] mal 100 µm bis hin zu 800 µm mal 800 µm.

Mit dem beschriebenen Verfahren kann die Lösung der Substanz insbesondere derart in der mikrofluidischen Vorrichtung bereitgestellt werden.

Lösungsmittel sind oft günstig und können auch in größeren Mengen von beispielsweise mehr als einem Milliliter in flüssiger Form vorgehalten und bei Raumtemperatur aufbewahrt werden. Sensitive Reagenzien wie Enzyme, Nukleinsäuren oder Katalysatoren sind hingegen oft teurer und benötigen aufwendigere Vorlagerungsmethoden. Um die eingesetzte Menge von diesen Schlüsselkomponenten zu reduzieren, werden diese vorzugsweise als Lyophilisat vorgelegt. Mit dem Begriff Lyophilisat wird ein Zustand bzw. eine Form einer Substanz beschrieben, die nach Gefriertrocknung der Substanz vorliegt. Diese feste Form der Substanz kann beispielsweise in mikrofluidischen Kanälen der mikrofluidischen Vorrichtung vorgelagert werden. Aus einem so vorgehaltenen Lyophilisat einer Substanz kann mit dem beschriebenen Verfahren eine Lösung der Substanz in einer gewünschten Menge und mit einer gewünschten Konzentration bereitgestellt werden. Lyophilisate lassen sich verglichen mit der löslichen Form einer Substanz auch bei Raumtemperatur besonders gut lagern.

Bei der mikrofluidischen Vorrichtung kann es sich insbesondere um ein sogenanntes "Lab on a Chip" bzw. um ein "Point-of-care" System (PoC) handeln. Ein solches "Lab on a Chip" ist dazu bestimmt und eingerichtet, biochemische Prozesse durchzuführen. Das bedeutet, dass Funktionalitäten eines makroskopischen Labors z. B. in ein Kunststoffsubstrat integriert werden. Die mikrofluidische Vorrichtung kann z. B. Kanäle, Reaktionskammern, vorgelagerte Reagenzien, Ventile, Pumpen und/oder Aktuations-, Detektions- und Steuereinheiten aufweisen. Die mikrofluidische Vorrichtung kann ermöglichen, biochemische Prozesse vollautomatisch zu prozessieren. Damit können z. B. Tests an flüssigen Proben durchgeführt werden. Derartige Tests können z. B. in der Medizin Anwendung finden. Die mikrofluidische Vorrichtung kann auch als eine mikrofluidische Kartusche bezeichnet werden. Insbesondere durch Eingabe von Proben in die mikrofluidische Vorrichtung können in der mikrofluidischen Vorrichtung biochemische Prozesse durchgeführt werden. Dabei können den Proben auch zusätzliche Substanzen beigemischt werden, die biochemische Reaktionen auslösen, beschleunigen und/oder ermöglichen.

Das Lyophilisat kann insbesondere wasserlöslich sein. Das Lyophilisat wird daher vorzugsweise absolut trocken vorgelagert. Kommt das Lyophilisat mit einer wässrigen Lösung in Berührung, kann sich das Lyophilisat auflösen. In einem mikrofluidischen Netzwerk kann dies beispielsweise zur Folge haben, dass bei einer Kammer und/oder bei Kanälen, in die die Lösung der Substanz eingebracht werden soll, keine Vorbenetzung vor dem Einbringen der Lösung der Substanz stattfindet. Eine Vorbenetzung ist aber insofern erwünscht, als dass ein vorbenetztes mikrofluidisches Volumen vollständig blasenfrei befüllt werden kann. Das liegt insbesondere daran, dass eine Vorbenetzung einer Oberfläche das Material der Oberfläche zugänglicher für eine Flüssigkeit machen kann. Auch kann durch eine Vorbenetzung bereits Luft aus einem Kanal bzw. aus einer Kammer verdrängt werden.

Kanäle und Kammern, deren Oberflächen nicht vorbenetzt sind, können Blasen verursachen, welche in einem sequentiellen Fluidablauf mitgenommen werden können. Soll eine bestimmte Konzentration der Lösung der Substanz erhalten werden, so ist eine bestimmte Menge des Lyophilisats in einer bestimmten Menge eines Lösungsmittels zu lösen. Blasen in einem Volumen können dabei zu Ungenauigkeiten führen. Findet keine Vorbenetzung und/oder Luftverdrängung statt, kann es also zu Ungenauigkeiten insbesondere bei der Konzentration der Lösung der Substanz kommen.

Zur Vermeidung einer ungewünschten Lösung des Lyophilisats und damit insbesondere zur Vermeidung von Blasenbildung wird das Lyophilisat vorzugsweise so vorgelagert, dass das Lyophilisat nicht mit Substanzen wie Wasser in Kontakt kommt, in denen das Lyophilisat gelöst werden kann.

Insbesondere daher wird in Schritt a) des beschriebenen Verfahrens eine Dispersion aus einem ersten Medium und einem Lyophilisat der Substanz bereitgestellt. Das Lyophilisat ist in dem ersten Medium nicht lösbar.

Das erste Medium ist vorzugsweise ein unpolares Lösungsmittel. So kann es sich bei dem ersten Medium insbesondere um Öl oder um ein organisches Lösungsmittel handeln. Das erste Medium umfasst vorzugsweise kein Wasser.

Unter einer Dispersion ist ein Gemisch aus mindestens zwei Stoffen zu verstehen, die sich nicht oder kaum ineinander lösen. Vorliegend handelt es sich um eine Dispersion eines festen Lyophilisats in dem ersten Medium, wobei das Lyophilisat in dem ersten Medium nicht gelöst wird. Das Lyophilisat kann dabei beispielsweise als ein Lyophilisatkörper vorliegen, der von dem ersten Medium (vorzugsweise vollständig, also zu allen Seiten hin) von dem ersten Medium umgeben ist. Das erste Medium kann das Lyophilisat somit vor Kontakt mit anderen Stoffen, insbesondere mit Wasser, schützen.

Aus der in der mikrofluidischen Vorrichtung vorgelagerten Dispersion aus dem Lyophilisat und dem ersten Medium kann durch Phasenextraktion die Lösung der Substanz erhalten werden, wenn diese benötigt wird. Das bedeutet, dass Schritt a) insbesondere über die Dauer einer Lagerung der mikrofluidischen Vorrichtung andauern kann. Wird die Lösung der Substanz in der mikrofluidischen Vorrichtung benötigt, kann diese insbesondere gemäß der Schritte b) bis d) aus der Dispersion erhalten werden.

In Schritt b) des beschriebenen Verfahrens wird ein zweites Medium zu der gemäß Schritt a) erhaltenen Dispersion hinzugefügt. Das Lyophilisat ist in dem zweiten Medium lösbar.

Bei dem zweiten Medium handelt es sich vorzugsweise um ein polares Lösungsmittel. So kann es sich bei dem zweiten Medium insbesondere um Wasser handeln. Das zweite Medium ist das Lösungsmittel, in dem die Substanz in der Lösung der Substanz gelöst ist. Es ist insbesondere möglich, dass das zweite Medium eine Probe eines zu untersuchenden Stoffs umfasst. So kann beispielsweise eine zu untersuchende flüssige Probe Teil des zweiten Mediums sein.

In Schritt c) des beschriebenen Verfahrens wird das Lyophilisat in dem zweiten Medium gelöst, so dass die Lösung der Substanz in dem zweiten Medium erhalten wird.

Damit das Lyophilisat in dem zweiten Medium gelöst werden kann, muss das Lyophilisat mit dem zweiten Medium in Kontakt kommen. Das kann beispielsweise dadurch erreicht werden, dass die Dispersion aus dem Lyophilisat und dem ersten Medium mit dem zweiten Medium vermischt wird. Dazu kann beispielsweise die mikrofluidische Vorrichtung bewegt, insbesondere geschüttelt werden. In Abhängigkeit der Dichten des Lyophilisats, des ersten Mediums und des zweiten Mediums ist es auch möglich, dass das Lyophilisat aufgrund der Schwerkraft mit dem zweiten Medium in Kontakt gelangt und so in dem zweiten Medium gelöst wird. Sind beispielsweise die Dichte des zweiten Mediums und die Dichte des Lyophilisats größer als die Dichte des ersten Mediums, wird sich das zweite Medium aufgrund der Schwerkraft unterhalb des ersten Mediums anordnen und das Lyophilisat wird sich aufgrund der Schwerkraft aus der Dispersion mit dem ersten Medium nach unten in das zweite Medium bewegen. Sind beispielsweise die Dichte des zweiten Mediums und die Dichte des Lyophilisats kleiner als die Dichte des ersten Mediums, wird sich das zweite Medium aufgrund der Schwerkraft oberhalb des ersten Mediums anordnen und das Lyophilisat wird sich aufgrund der Schwerkraft aus der Dispersion mit dem ersten Medium nach oben in das zweite Medium bewegen.

In Schritt d) des beschriebenen Verfahrens wird die gemäß Schritt c) erhaltene Lösung von dem ersten Medium getrennt.

Schritt d) kann insbesondere als eine Phasenextraktion bezeichnet werden. Insbesondere kann nach Schritt c) ein Gemisch aus dem ersten Medium und der Lösung der Substanz in dem zweiten Medium vorliegen. Es ist bevorzugt, dass das erste Medium und das zweite Medium bzw. die Lösung der Substanz in dem zweiten Medium verschiedene Dichten haben. So kann durch bloßes Abwarten eine Trennung des Gemischs aus dem ersten Medium und der Lösung der Substanz in dem zweiten Medium in zwei Phasen erhalten werden. Das erste Medium liegt dabei als eine erste Phase und die Lösung der Substanz in dem zweiten Medium als eine zweite Phase vor. Je nach Dichte des ersten Mediums und des zweiten Mediums bzw. der Lösung der Substanz in dem zweiten Medium liegt entweder die erste Phase oberhalb der zweiten Phase vor oder liegt die zweite Phase oberhalb der ersten Phase vor. Die Phasen können beispielsweise dadurch getrennt werden, dass die obere Phase durch Kippen der mikrofluidischen Vorrichtung abgegossen wird und/oder dass eine der Phasen abgepumpt wird.

In einer bevorzugten Ausführungsform des Verfahrens wird in Schritt c) das zweite Medium mit der Dispersion aus dem Lyophilisat und dem ersten Medium derart vermischt, dass eine Emulsion gebildet wird, in der das Lyophilisat durch das zweite Medium gelöst wird. Die Emulsion wird aufgelöst, nachdem das Lyophilisat in dem zweiten Medium gelöst ist.

Eine Emulsion ist ein fein verteiltes Gemisch nicht mischbarer Stoffe, die insbesondere in flüssigem Zustand vorliegen können. Vorliegend wird eine Emulsion aus dem zweiten Medium und der Dispersion des ersten Mediums mit dem Lyophilisat gebildet. Eine Emulsion kann insbesondere dadurch erhalten werden, dass zwei nicht mischbare Flüssigkeiten beispielsweise durch Schütteln derart fein ineinander verteilt werden, dass es zwar zu keiner Lösung der Flüssigkeiten ineinander kommt, dass aber eine Unterscheidung zwischen den beiden Flüssigkeiten (insbesondere als zwei sichtbar unterscheidbare Phasen) nicht möglich ist. Bei der Bildung einer Emulsion handelt es sich um einen physikalischen Vorgang. Bei der Bildung einer Lösung hingegen handelt es sich um einen chemischen Vorgang, bei dem chemische Bindungen zwischen Molekülen oder Atomen verändert werden.

Die Bildung einer Emulsion hat bei dem beschriebenen Verfahren den Vorteil, dass das zweite Medium derart in dem ersten Medium bzw. in der Dispersion aus dem ersten Medium mit dem Lyophilisat verteilt wird, dass das zweite Medium mit dem Lyophilisat in Kontakt kommt. Somit kann das Lyophilisat durch das zweite Medium gelöst werden. Nachdem das Lyophilisat gelöst ist, liegt eine Emulsion aus dem ersten Medium und der Lösung der Substanz in dem zweiten Medium vor.

Nachdem das Lyophilisat vollständig gelöst ist, kann das erste Medium von der Lösung der Substanz in dem zweiten Medium getrennt werden. Dazu wird zunächst die Emulsion aufgelöst. Das erfolgt noch als Teil von Schritt c). Die Emulsion kann insbesondere durch Abwarten unter Ausnutzung der Schwerkraft aufgelöst werden. Nachdem sich das erste Medium und die Lösung der Substanz in dem zweiten Medium zumindest insoweit voneinander getrennt haben, dass zwei verschiedene Phasen sichtbar sind, kann die Trennung der Lösung von dem ersten Medium gemäß Schritt d) erfolgen. Auch das kann durch Abwarten aufgrund der Schwerkraft erfolgen. Insoweit kann der Übergang zwischen der Auflösung der Emulsion und der Trennung der Phasen, also zwischen Schritt c) und Schritt d), fließend sein.

In dieser Ausführungsform liegt nach Schritt a) zunächst ein Lyophilisat in einer Dispersion mit dem ersten Medium vor. Diese Dispersion wird dann durch die Schritte b) und c) in eine Emulsion überführt. Dabei wird das Lyophilisat in dem zweiten Medium gelöst. Die zwei so erhaltenen Phasen werden dann in Schritt d) durch Phasenextraktion getrennt. Die Substanz kann dann als Lösung in dem zweiten Medium in einer gewünschten Menge und mit einer gewünschten Konzentration vorliegen.

In einer weiteren bevorzugten Ausführungsform des Verfahrens ist die mikrofluidische Vorrichtung beim Auflösen der Emulsion in Schritt c) derart orientiert, dass eine Unterseite einer Kammer, in der die Emulsion vorliegt, gegenüber einer horizontalen Ebene verkippt ist.

Die Emulsion kann in Schritt c) insbesondere in einer Kammer der mikrofluidischen Vorrichtung erhalten werden. Zur Trennung der Emulsion kann insbesondere die Schwerkraft ausgenutzt werden. Dabei bewegen sich die schwereren Anteile der Emulsion nach unten und die leichteren Anteile nach oben. Je geringer eine Ausdehnung der Emulsion in Richtung der Schwerkraft ist, umso kleiner ist der dabei von den Bestandteilen der Emulsion zur Trennung der Emulsion zurückzulegende Weg. Durch verkippen der Kammer bzw. der gesamten mikrofluidischen Vorrichtung aus der horizontalen Ebene kann die Ausdehnung der Emulsion in Richtung der Schwerkraft zumindest für einen Teil der Emulsion verringert werden. Auch kann durch Verkippen die Oberfläche der Emulsion vergrößert werden. Auch das kann dazu beitragen, dass die Emulsion schneller aufgelöst wird.

Vorzugsweise wird die mikrofluidische Vorrichtung um einen Winkel im Bereich von 5° bis 60°, insbesondere im Bereich von 20° bis 40° gegenüber der horizontalen Ebene verkippt.

In einer weiteren bevorzugten Ausführungsform des Verfahrens wird die Emulsion gebildet, indem das zweite Medium und die Dispersion aus dem Lyophilisat und dem ersten Medium gemeinsam wiederholt zwischen mindestens zwei Mischkammern der mikrofluidischen Vorrichtung verschoben werden.

Vorzugsweise werden genau zwei Mischkammern verwendet. Die mindestens zwei Mischkammern sind vorzugsweise mit einem Verbindungskanal miteinander verbunden. Ein Strömungspfad zwischen den beiden Mischkammern weist vorzugsweise zumindest an einer Stelle eine Verengung auf. Das kann insbesondere dadurch realisiert sein, dass der Verbindungskanal einen kleineren Querschnitt aufweist als eine oder beide Mischkammern. Somit kommt es bei einem Verschieben der zu bildenden Emulsion (also des zweiten Mediums und der Dispersion aus dem ersten Medium mit dem Lyophilisat) zwischen den Mischkammern zu Turbulenzen in der Strömung der zu bildenden Emulsion. Derartige Turbulenzen können eine besonders feine Verteilung der Bestandteile der zu bildenden Emulsion (also des zweiten Mediums und der Dispersion des ersten Mediums mit dem Lyophilisat) ermöglichen.

Die zu bildende Emulsion kann insbesondere durch ein Pumpen zwischen den Mischkammern hin- und her bewegt werden. Ein dafür benötigter Druck kann beispielsweise durch ein Zusammendrücken einer flexiblen Kammer und/oder durch eine mechanische und/oder elektrische Pumpe erfolgen.

In einer weiteren bevorzugten Ausführungsform des Verfahrens wird zur Bildung der Emulsion eine Temperatur des zweiten Mediums und/oder der Dispersion aus dem Lyophilisat und dem ersten Medium erhöht.

Eine hohe Temperatur kann dazu beitragen, dass sich das zweite Medium besonders fein und besonders schnell in dem ersten Medium bzw. in der Dispersion aus dem ersten Medium mit dem Lyophilisat verteilt. Vorzugsweise wird die Temperatur zur Bildung der Emulsion auf einen Wert im Bereich zwischen 50 C und 90°C, insbesondere im Bereich zwischen 60°C und 75°C erhöht. Die zu wählende Temperatur kann insbesondere von dem Lyophilisat, aber auch von dem ersten Medium und/oder von dem zweiten Medium abhängen.

In einer weiteren bevorzugten Ausführungsform des Verfahrens wird zur Auflösung der Emulsion eine Temperatur der Emulsion abgesenkt.

Eine niedrige Temperatur kann dazu beitragen, dass sich das zweite Medium besonders schlecht in dem ersten Medium bzw. in der Dispersion aus dem ersten Medium mit dem Lyophilisat verteilt. Vorzugsweise wird die Temperatur zur Auflösung der Emulsion auf einen Wert im Bereich zwischen 0°C und 30°C, insbesondere im Bereich zwischen 5°C und 10°C abgesenkt. Die zu wählende Temperatur kann insbesondere von dem Lyophilisat, aber auch von dem ersten Medium und/oder von dem zweiten Medium abhängen.

In einer weiteren bevorzugten Ausführungsform des Verfahrens wird das Lyophilisat in einer Vorhaltekammer der mikrofluidischen Vorrichtung vorgehalten, wobei die Dispersion gemäß Schritt a) durch Zugabe des ersten Mediums in die Vorhaltekammer bereitgestellt wird.

Die Dispersion aus dem Lyophilisat und dem ersten Medium kann in Schritt a) des beschriebenen Verfahrens insbesondere dadurch bereitgestellt werden, dass eine bereits fertige Dispersion in die mikrofluidische Vorrichtung eingebracht wird oder bereits in der mikrofluidischen Vorrichtung vorgehalten ist. So kann insbesondere eine mikrofluidische Vorrichtung in einem Auslieferungszustand bereits die Dispersion enthalten.

Als Alternative zu einer Bereitstellung einer fertigen Dispersion umfasst das Bereitstellen der Dispersion in der vorliegenden Ausführungsform das Erstellen der Dispersion. Dazu werden das Lyophilisat und das erste Medium zusammengegeben.

In einer weiteren bevorzugten Ausführungsform des Verfahrens wird das Lyophilisat zumindest zeitweise durch eine Strömung des ersten Mediums innerhalb der mikrofluidischen Vorrichtung bewegt.

Das Lyophilisat kann insbesondere an einer anderen Stelle der mikrofluidischen Vorrichtung vorgehalten werden, als an der die Substanz bzw. dessen Lösung verwendet werden soll. Durch eine Strömung des ersten Mediums kann das Lyophilisat auf besonders einfache Weise zwischen verschiedenen Stellen der mikrofluidischen Vorrichtung bewegt werden. Durch das erste Medium kann das Lyophilisat dabei vor anderen Substanzen geschützt werden.

Die Strömung des ersten Mediums kann beispielsweise dadurch eingestellt werden, dass das erste Medium an einem oder mehreren Einlässen in die mikrofluidische Vorrichtung eingeleitet wird. Auch kann das erste Medium in der mikrofluidischen Vorrichtung vorgehalten werden, wobei eine Strömung des ersten Mediums durch Zusammendrücken einer flexiblen Kammer und/oder durch eine mechanische und/oder elektrische Pumpe erzeugt werden. Vorzugsweise weist die mikrofluidische Vorrichtung Ventile auf, über die die Strömung des ersten Mediums gelenkt werden kann.

In einer weiteren bevorzugten Ausführungsform des Verfahrens wird das Lyophilisat durch eine Strömung des ersten Mediums an eine Verengungsstelle einer Leitung der mikrofluidischen Vorrichtung bewegt und dort zumindest zeitweise gehalten.

In dieser Ausführungsform kann das Lyophilisat insbesondere an einer bestimmten Position gehalten werden. Das kann beispielsweise vorteilhaft sein, um das Lyophilisat zwischen zwei Prozessschritten zwischenzulagern und/oder um das Lyophilisat zur Verwendung in einem Prozess bereitzuhalten. Die Verengungsstelle ist vorzugsweise derart ausgebildet, dass das Lyophilisat diese nicht passieren kann. So kann beispielsweise ein Auslass aus einer Kammer, in dem sich das Lyophilisat befindet, einen derart kleinen Querschnitt aufweisen, dass das Lyophilisat die Kammer nicht durch den Auslass verlassen kann. Mit einer Strömung, die die Kammer durch den Auslass verlässt, wird das Lyophilisat aber bis zu der Verengungsstelle bewegt, so dass die Position des Lyophilisats unmittelbar stromaufwärts der Verengungsstelle festgelegt wird.

An der Verengungsstelle weist ein Strömungspfad vorzugsweise einen Querschnitt auf, der so dimensioniert und gestaltet ist, dass das Lyophilisat die Verengungsstelle nicht passieren kann. Als eine Verengungsstelle kommt auch beispielsweise ein Gitter in Betracht, bei dem auch die größte Öffnung einen zu kleinen Querschnitt für das Lyophilisat aufweist.

In einer weiteren bevorzugten Ausführungsform des Verfahrens wird das Lyophilisat in Schritt a) als eine Mehrzahl von Lyophilisatkörpern bereitgestellt, wobei die Lyophilisatkörper zumindest zeitweise nacheinander oder gleichzeitig durch Einstellen einer jeweiligen Strömung des ersten Mediums innerhalb der mikrofluidischen Vorrichtung bewegt werden.

Die mikrofluidische Vorrichtung kann eine Vielzahl von Kammern und Kanälen aufweisen. So können beispielswiese in mehreren Kammern Lyophilisatkörper gleicher oder verschiedener Substanzen vorgehalten werden. Je nach durchzuführendem Prozess kann es dabei gewünscht sein, eine oder mehrere dieser Substanzen beispielswiese in einer Prozesskammer zu verwenden. Durch Einstellen einer Strömung des ersten Mediums können dazu beispielsweise einer oder mehrere der Lyophilisatkörper in eine Mischkammer bewegt werden, in der die Lösung der Substanz gemäß dem beschriebenen Verfahren erhalten werden kann.

Als ein weiterer, nicht beanspruchter Aspekt wird eine Verwendung eines Lyophilisats einer Substanz zur Bereitstellung einer Lösung der Substanz in einer mikrofluidischen Vorrichtung vorgestellt.

Die weiter vorne beschriebenen besonderen Vorteile und Ausgestaltungsmerkmale des Verfahrens sind auf die beschriebene Verwendung anwendbar und übertragbar.

Mit dem beschriebenen Verfahren kann insbesondere ein Lyophilisat in einer Dispersion gelagert werden, zur Benetzung von Oberflächen der mikrofluidischen Vorrichtung verwendet werden und/oder durch die mikrofluidische Vorrichtung transportiert werden. Weiterhin kann das Lyophilisat durch Phasenextraktion in einer wässrigen Phase gelöst werden. Dabei kann das Lyophilisat als verdichteter Feststoff (engl. "Bead") in eine organische Phase (dem zweiten Medium; bevorzugt ein Öl) versetzt werden. Die organische Phase löst das Bead nicht. Eine weitere, wässrige Phase (das zweite Medium) kann das Bead zur Bildung einer Emulsion auflösen.

In der organischen Phase (dem ersten Medium) wird das Lyobead (also das Lyophilisat) nicht gelöst. Dadurch ist eine Kammer, in welchem das Lyobead vorgelagert ist, fluidisch angesteuert. Je nach verwendetem Öl können dabei Oberflächen der mikrofluidischen Vorrichtung benetzt werden und/oder Luft aus Kammern und Leitungen verdrängt werden.

Ein Lyobead kann mittels der organischen Phase (dem ersten Medium) in einem mikrofluidischen Netzwerk bewegt werden und die Position verändern. Ob das Lyobead transportiert wird oder vor Ort bleibt, kann insbesondere durch die Geometrie der Kanäle kontrolliert werden. Der Transport der Lyobeads kann insbesondere auch ein hintereinander Schalten von mehreren Lyobeads (also das Verwenden mehrerer Lyobeads nacheinander) ermöglichen. Dies kann insbesondere auch ein serielles Schalten von mehreren PCR-Reaktionen (also Polymerase-Kettenreaktionen) ermöglichen, was wiederum einen höheren Multiplexgrad ermöglichen kann.

Es kann eine organische Phase (also ein erstes Medium) gewählt werden, welche eine höhere Gaslöslichkeit als die wässrige Phase (also das zweite Medium) aufweist. Dabei können eventuelle Gase, welche beim Löseprozess entstehen, durch die organische Phase (das zweite Medium) abgebunden werden und auch via Phasentrennung separiert werden.

Wird ein Lyophilisat als wässrige Phase eingesetzt, können durch die Phasenextraktion lipophile Komponenten, welche zum Beispiel mit einer darauffolgende PCR interferieren können, durch die organische Phase (das erste Medium) abgetrennt werden.

Im Lyobead enthaltene Salze können positiv zur erneuten Phasentrennung nach der Emulgation beitragen, ohne dass mit zusätzlichen Demulgatoren die Phasentrennung erzwungen werden muss.

In einer mikrofluidischen Vorrichtung vorherrschende Eigenschaften wie beispielsweise eine Temperatur und/oder eine Neigung der mikrofluidischen Vorrichtung sowie Dichteunterschiede der Phasen (des ersten Mediums und des zweiten Mediums) können die Emulsionbildung und/oder die Deemulsionierung begünstigen. So kann eine Emulsion durch eine hohe Temperatur begünstigt werden. Eine Abkühlung kann hingegen eine Phasentrennung begünstigen. Wenn die mikrofluidische Vorrichtung geneigt ist, kann die leichtere Phase besonders schnell nach oben steigen.

Die mikrofluidische Vorrichtung umfasst vorzugsweise eine Einwegflusssystem, welches insbesondere eine sogenannte Point-of-care-Diagnose erlaubt. Bestandteile der mikrofluidischen Vorrichtung können dabei in einem Polycarbonatspritzgussteil gefertigt werden. Für ein sequentielles Lösen ist vorzugsweise eine Möglichkeit einer Ventilschaltung vorgesehen. Das verwendete Lyophilisat sollte wasserlöslich sein und möglichst inert zu Ölen. Als wässrige Löse kann Wasser versetzt mit klassischen Attributen wie Tween, Triton-X, Calcium eingesetzt werden. Diese sind vorzugsweise kompatibel zum Lyobead. Als mögliche Öle können inerte Minearlöle, Silikonöle oder fluorierte Öle eingesetzt werden.

Weitere Einzelheiten der Erfindung und ein Ausführungsbeispiel, auf welches die Erfindung jedoch nicht beschränkt ist, werden anhand der Zeichnungen näher erläutert. Es zeigen:
- Fig. 1:: eine Darstellung eines Verfahrens zum Bereitstellen einer Lösung einer Substanz in einer mikrofluidischen Vorrichtung,
- Fig. 2a bis 2d:: Darstellungen des Verfahrens zum Bereitstellen einer Lösung einer Substanz in einer mikrofluidischen Vorrichtung aus Fig. 1,
- Fig. 3a bis 3c:: Darstellungen eines Teils des Verfahrens aus den Fig. 1 und 2, in dem das Lyophilisat durch die mikrofluidische Vorrichtung bewegt wird,
- Fig. 4a bis 4d:: Darstellungen eines Teils des Verfahrens aus den Fig. 1 und 2, in dem das Lyophilisat durch die mikrofluidische Vorrichtung bewegt wird
- Fig. 5a und 5b:: Darstellungen eines Teils des Verfahrens aus den Fig. 1 und 2, in dem eine Emulsion aufgelöst wird,
- Fig. 6a bis 6d:: Darstellungen eines Teils des Verfahrens aus den Fig. 1 und 2, in dem das Lyophilisat in dem zweiten Medium gelöst wird,
- Fig. 7a bis 7d:: Darstellungen eines Teils des Verfahrens aus den Fig. 1 und 2, in dem die Emulsion gebildet und aufgelöst wird,
- Fig. 8a bis 8f:: Darstellungen eines Teils des Verfahrens aus den Fig. 1 und 2, in dem zwei Lyophilisatkörper durch die mikrofluidische Vorrichtung bewegt werden.

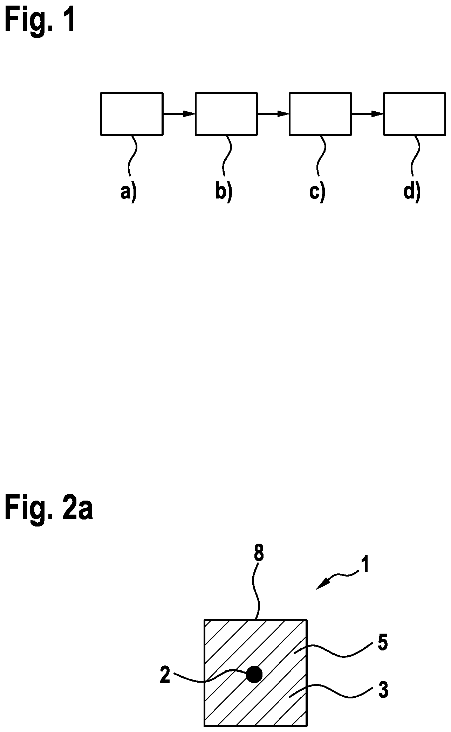

Fig. 1 zeigt eine erste schematische Darstellung eines Verfahrens zum Bereitstellen einer Lösung 7 einer Substanz in einer mikrofluidischen Vorrichtung 1. Die Bezugszeichen beziehen sich auf die folgenden Fig. Das Verfahren umfasst die folgenden Verfahrensschritte:
a) Bereitstellen einer Dispersion 5 aus einem ersten Medium 3 und einem Lyophilisat 2 der Substanz, wobei das Lyophilisat 2 in dem ersten Medium 3 nicht lösbar ist,
b) Hinzufügen eines zweiten Mediums 4 zu der gemäß Schritt a) erhaltenen Dispersion 5, wobei das Lyophilisat 2 in dem zweiten Medium 4 lösbar ist,
c) Lösen des Lyophilisats 2 in dem zweiten Medium 4, so dass die Lösung 7 der Substanz in dem zweiten Medium 4 erhalten wird,
d) Trennen der gemäß Schritt c) erhaltenen Lösung 7 von dem ersten Medium 3.

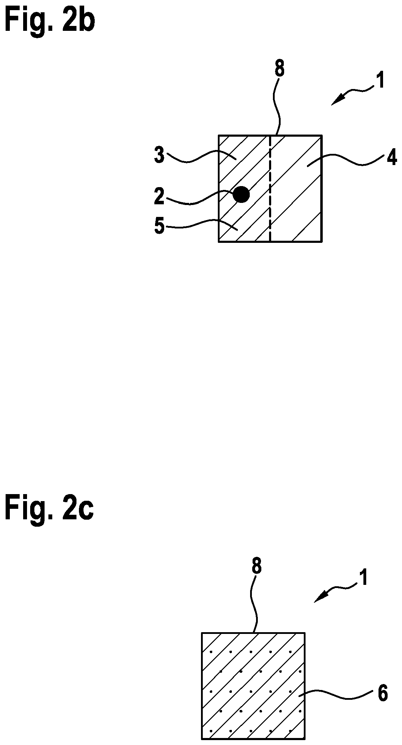

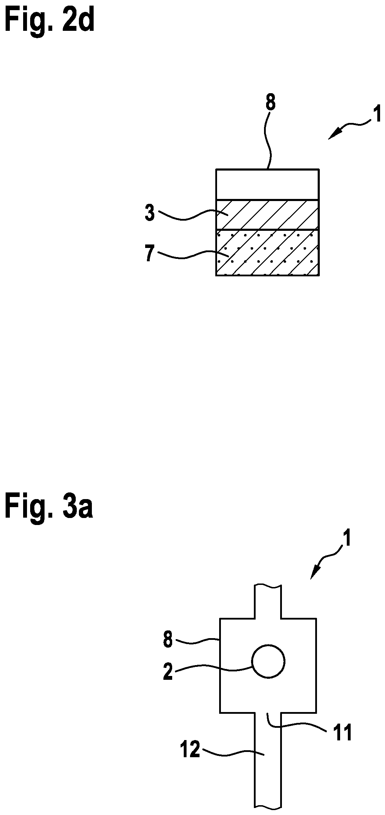

Die Fig. 2a bis 2d zeigen Darstellungen des Verfahrens aus Fig. 1. Dabei ist eine mikrofluidische Vorrichtung 1 gezeigt. In einer Kammer 8 der mikrofluidischen Vorrichtung 1 ist ein Lyophilisat 2 als ein Lyobead in einem ersten Medium 3 wie beispielsweise Öl vorgelagert (Fig. 2a). Es liegt somit eine Dispersion 5 aus dem ersten Medium 3 und dem Lyophilisat 2 vor. In die Kammer 8 wird ein zweites Medium 4 wie beispielsweise eine wässrige Phase zugeführt (Fig. 2b). Die beiden Phasen werden dann gemischt und dabei eine Emulsion 6 erzeugt (Fig. 2c). Anschließend erfolgt eine Phasenextraktion, wobei das Lyophilisat 2 (also das Bead) in der wässrigen Phase gelöst wird und von der Dispersion 5 in eine Lösung 7 übergeht (Fig. 2d). Die Emulsion 6 wird anschließend ruhen gelassen, wobei sich die Emulsion 6 auflöst und sich die beiden Phasen (also das erste Medium 3 und die Lösung 7 - wie beispielsweise bei einem Scheidetrichter - auftrennen. Gase (z.B. Luftblasen) können sich als eigene Phase abtrennen. Die Deemulsionierung kann durch Zugabe von Additiven und/oder durch Thermomanagement kontrolliert bzw. begünstigt werden. Eine Kühlung kann zum Beispiel eine schlechtere Mischung der beiden Phasen und damit eine bessere Abscheidung bewirken.

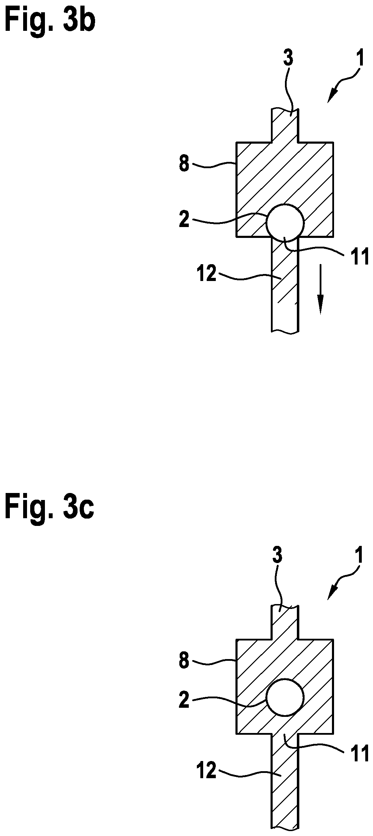

Die Fig. 3a bis 3c zeigen Darstellungen eines Teils des Verfahrens aus den Fig. 1 und 2, in dem das Lyophilisat 2 durch die mikrofluidische Vorrichtung 1 bewegt wird. Dabei ist gezeigt, dass das Lyophilisat 2 als ein Lyobead trocken in einer Kammer 8, die Teil einer Leitung 12 ist, vorgelagert ist (Fig. 3a). Wird die Kammer 8 mit Öl als einem ersten Medium 3 befüllt, wird das Lyophilisat 2 durch die Geometrie an einer Verengungsstelle 11 der Leitung 12 zurückgehalten und Luft wird durch das Öl aus der Kammer 8 verdrängt (Fig. 3b). Somit kann die Kammer 8 fluidisch mit einer organischen Phase, welche inert zum Lyobead ist, angesteuert werden. Liegt keine derartige Strömung des ersten Mediums 3 vor, kann sich das Lyophilisat 2 auch beispielsweise in der Mitte der Kammer 8 befinden (Fig. 3c).

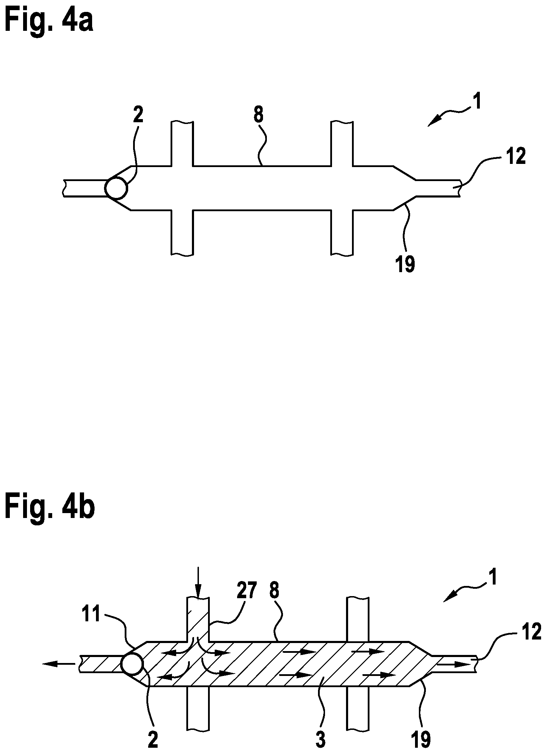

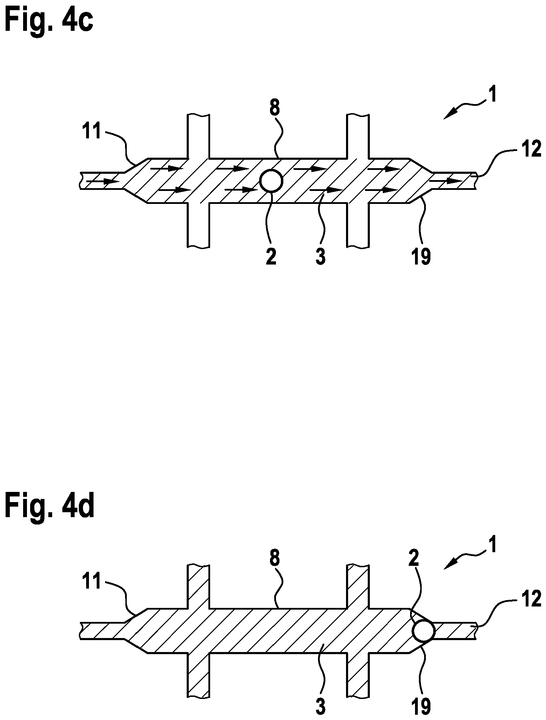

In den Fig. 4a bis 4d sind Darstellungen eines Teils des Verfahrens aus den Fig. 1 und 2 gezeigt, in denen das Lyophilisat 2 durch die mikrofluidische Vorrichtung 1 bewegt wird. Dadurch wird demonstriert, wie ein als Lyobdead vorliegendes Lyophilisat 2 in eine Dispersion 5 gebracht werden kann und mittels Fluss an eine andere Stelle der mikrofluidischen Vorrichtung 1 transportiert werden kann. Das Lyophilisat 2 liegt dabei zunächst am linken Rand einer Kammer 8 in einer Leitung 12 vor, welche zwei trichterförmige Verengungsstellen 11, 19 aufweist (Fig. 4a). In die Kammer 8 wird anschließend durch einen Einlass 27 das erste Medium 3 eingefüllt. Das Lyophilisat 2 bleibt dabei statisch, da es durch eine erste Verengungsstelle 11 mit Trichtergeometrie zurückgehalten wird (Fig. 4b). Wird nun die Flussrichtung des ersten Mediums 3 (also des Öls) umgekehrt, wird das Lyophilisat 2 mit dem ersten Medium 3 mittransportiert, da es durch die Kammergeometrie nicht mehr aufgehalten wird (Fig. 4c). Kommt das Lyophilisat 2 zu einer zweiten Verengungsstelle 19 am rechten Rand der Kammer 8, wird das Lyophilisat 2 wieder immobilisiert und hat somit eine neue Lokalität (Fig. 4d).

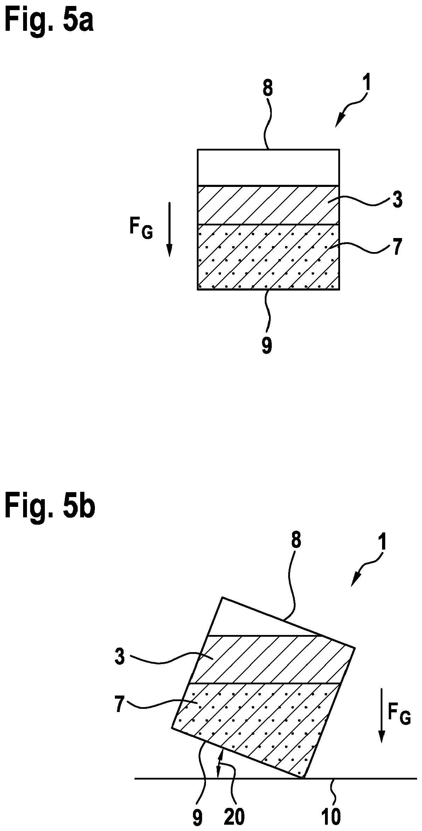

In den Fig. 5a und 5b sind Darstellungen eines Teils des Verfahrens aus den Fig. 1 und 2 gezeigt, in dem eine Emulsion 6 aufgelöst wird. Dabei wird gezeigt, dass die Gravitationskraft für ein Zweiphasensystem aus dem ersten Medium 3 und der Lösung 7 ausgenutzt werden kann. Gravitation hilft, die Phasen voneinander zu trennen. Die Phase mit kleinerer Dichte wird sich im Gleichgewicht über die Phase mit der höheren Dichte schichten. Dies begünstigt nach der Deemulsionierung das Abtrennen der beiden Phasen, da diese als einzelne Phasen vorliegen werden. Es muss nicht zwingend die ganze Gravitationskraft wie in Fig. 5a gezeigt wirken. Auch eine Neigung des Gesamtsystems (z.B. um 30°, was bedeutet, dass die Gravitationskraft F_{G} nur zur Hälfte wirkt) unterstützt den Prozess (Fig. 5b). Dazu ist ein Winkel 20 eingezeichnet, der angibt, wie weit eine Unterseite 9 der Kammer 8 gegenüber einer horizontalen Ebene 10 verkippt ist.

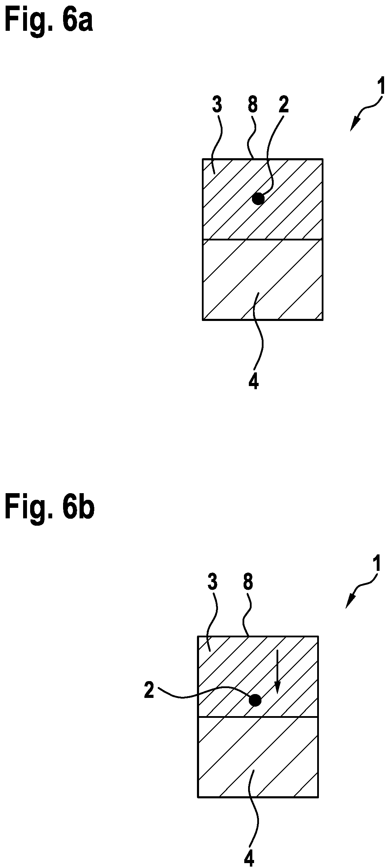

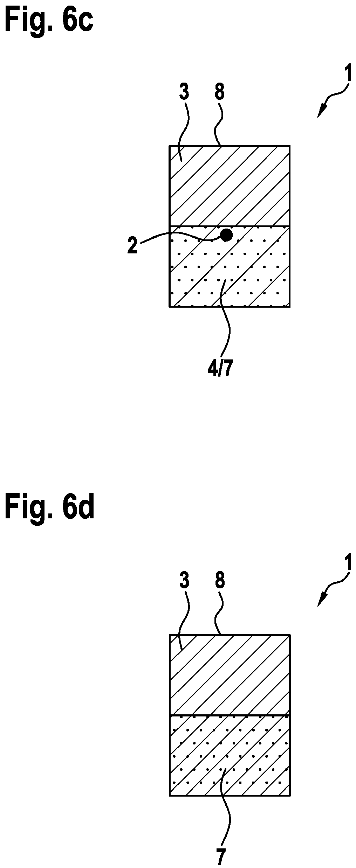

In den Fig. 6a bis 6d sind Darstellungen eines Teils des Verfahrens aus den Fig. 1 und 2 gezeigt, in dem das Lyophilisat 2 in dem zweiten Medium 4 gelöst wird. Dazu ist dargestellt, wie die Gravitationskraft ausgenutzt werden kann, um ein als Lyobead vorliegendes Lyophilisat 2 zu lösen. Wenn die Dichte des Lyophilisats 2 größer als die des ersten Mediums 3 (also beispielsweise des Öls) ist, wird sich das Lyophilisat 2 nach unten bewegen (Fig. 6a über Fig. 6b bis Fig. 6c). Befindet sich unter dem ersten Medium 3 das schwerere zweite Medium 4 (also beispielsweise die wässrige Phase), wird an der Grenzfläche der beiden Phasen das Lyophilisat 2 direkt gelöst, sodass die Lösung 7 erhalten wird (Fig. 6c nach Fig. 6d). Dabei ist in Fig. 6c mit dem Bezugszeichen "4/7" angedeutet, dass bereits Teile des Lyophilisats 2 in dem zweite Medium 4 gelöst sind, sodass das zweite Medium 4 teilweise bereits als Lösung 7 vorliegt. Es wird in dieser Ausführungsform keine Emulsion gebildet.

Das System funktioniert auch im umgekehrten Fall, wenn das Öl schwerer ist und das Lyobead aufsteigt und an der Grenzfläche oben in der wässrigen Phase gelöst wird.

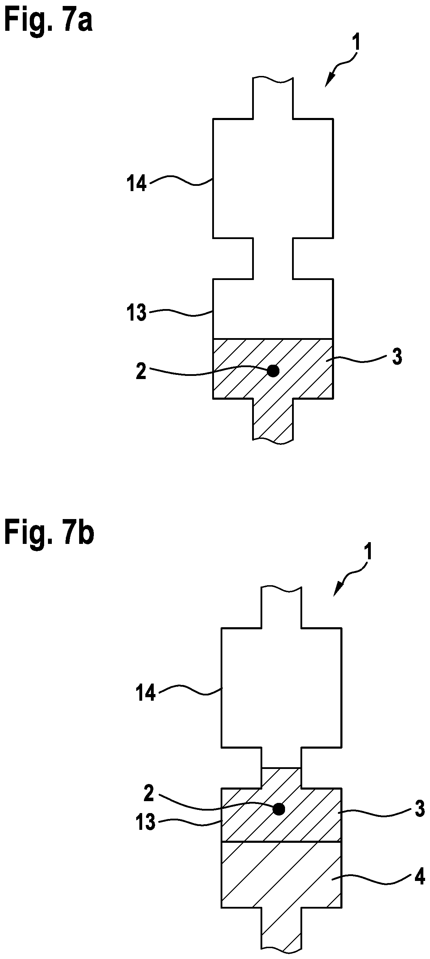

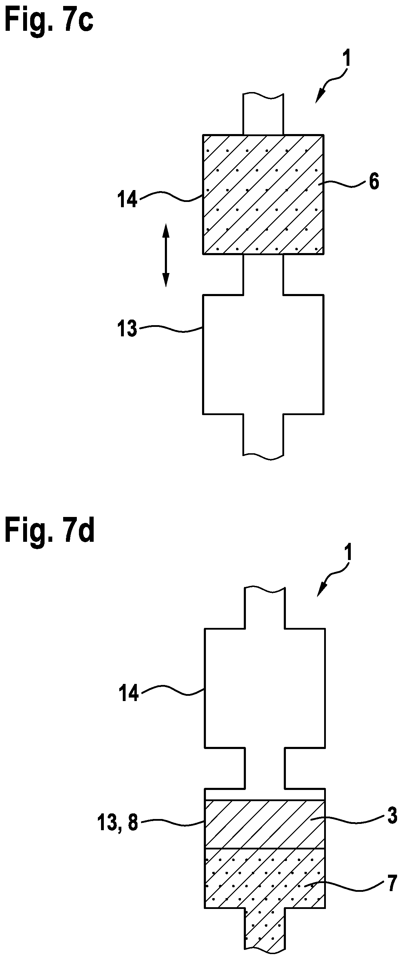

In den Fig. 7a bis 7d sind Darstellungen eines Teils des Verfahrens aus den Fig. 1 und 2 gezeigt, in dem die Emulsion 6 gebildet und aufgelöst wird. Dabei ist gezeigt, wie ein in der Dispersion 5 als Lyobead vorliegendes Lyophilisat 2 mechanisch in dem zweiten Medium 4 und damit in einer anderen Phase verteilt werden kann. Dabei wird das Lyobead in einer ersten Mischkammer 13 vorgelagert oder in diese transportiert (Fig. 7a). Die erste Mischkammer 13 wird entweder zur Hälfte mit dem zweiten Medium 4 befüllt oder ist so konstruiert, dass sie durch Fluss mit dem zweiten Medium 4 ergänzt werden kann (Fig. 7b). Dieses Zweiphasensystem mit Lyobead in Öl (als Dispersion 5 des ersten Mediums 3 mit dem Lyophilisat 2) und im Idealfall Probematerial in dem zweiten Medium 4 wird durch schnelles Hin- und Herschieben zwischen der ersten Mischkammer 13 und einer zweiten Mischkammer 14 ineinander verteilt (Fig. 7c). Diese Pendelbewegung imitiert ein Schütteln, wobei eine Emulsion 6 entsteht. In der Emulsion 6 löst sich das Lyophilisat 2 in dem zweiten Medium 4 und wird somit aus dem ersten Medium 3 extrahiert. Die Emulsion 6 wird dann stehengelassen, wobei eine Phasentrennung einsetzt, durch die die Lösung 7 von dem ersten Medium 3 getrennt wird (Fig. 7d). Um eine optimale Phasentrennung zu erzeugen, kann die mikrofluidische Vorrichtung 1 wie in Fig. 5b gezeigt gekippt werden, so dass die Gravitation einen entsprechenden Einfluss auf die Trennung der Phasen hat. Die beiden Phasen können anschließend durch Abpumpen fluidisch getrennt werden. Auch kann im Emulsionsschritt zusätzlich eine höhere Temperatur eingestellt werden, damit sich die beiden Phasen besser mischen. Bei der Phasentrennung kann die Temperatur wieder heruntergesetzt werden (insbesondere durch Kühlung), womit die Löslichkeit der beiden Phasen zusätzlich abnimmt.

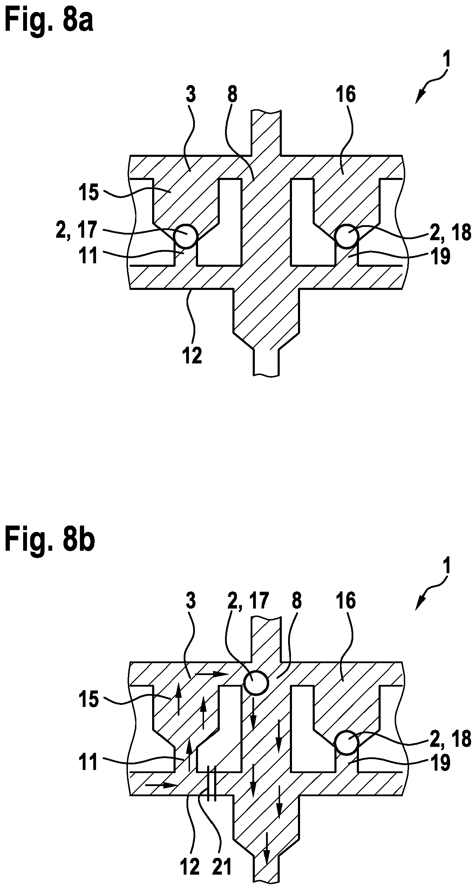

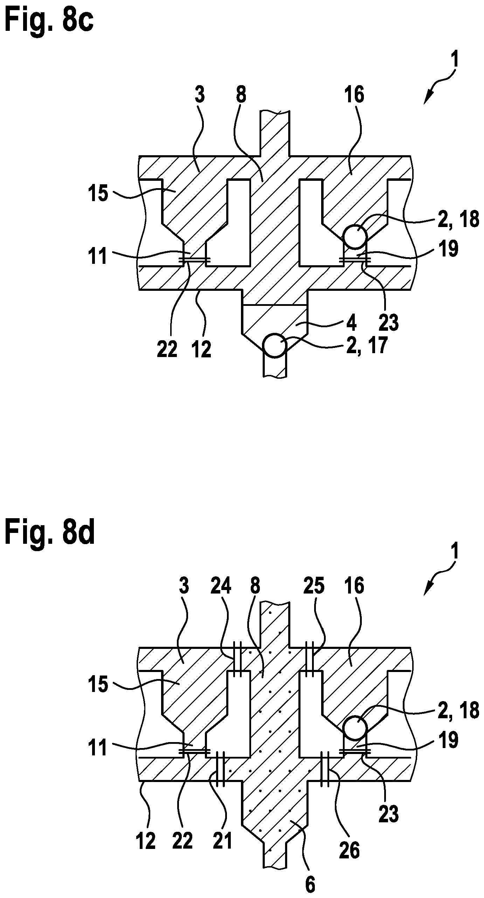

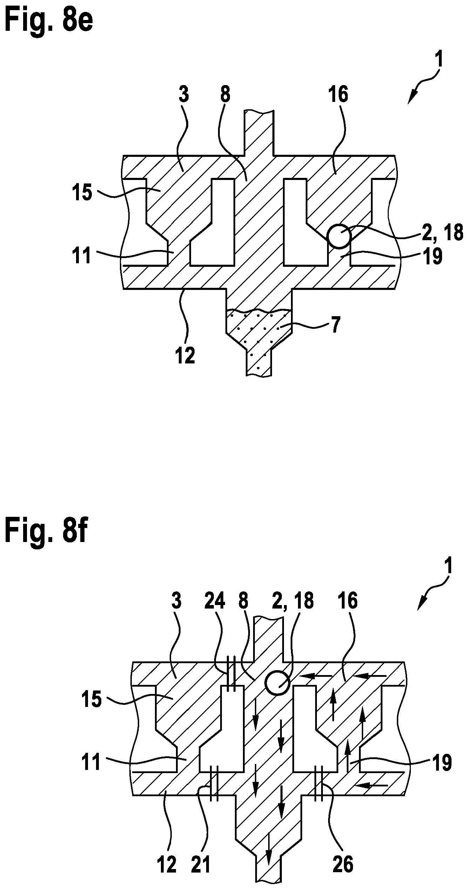

In den Fig. 8a bis 8f sind Darstellungen eines Teils des Verfahrens aus den Fig. 1 und 2 gezeigt, in dem zwei Lyophilisatkörper 17,18 (die mit dem Lyophilisat 2 gebildet sind) durch die mikrofluidische Vorrichtung 1 bewegt werden. Damit wird ein fluidisches Konzept demonstriert, bei dem die beiden Lyophilisatkörper 17, 18 (die auch als Lyobeads bezeichnet werden können) sukzessive gelöst werden. Ein erster Lyophilisatkörper 17 ist in einer ersten Vorhaltekammer 15 der mikrofluidischen Vorrichtung 1 vorgehalten. Ein zweiter Lyophilisatkörper 18 ist in einer zweiten Vorhaltekammer 16 der mikrofluidischen Vorrichtung 1 vorgehalten. Die beiden Lyophilisatkörper 17, 18 sind in dem ersten Medium 3 bereitgestellt. Zunächst werden die beiden Lyophilisatkörper 17, 18 an jeweiligen Verengungsstellen 11, 19 von Leitungen 12 gehalten (Fig. 8a). Der erste Lyophilisatkörper 17 wird davon ausgehend mittels geeigneter Ventilstellungen so von dem ersten Medium 3 angeströmt, dass der erste Lyophilisatkörper 17 - nach dem Prinzip aus den Fig. 4a bis 4d - in eine freie trichterförmige Kammer 8 überführt wird (Fig. 8b). Dabei ist insbesondere ein erstes Ventil 21 geschlossen. In den Fig. 8a bis 8f sind Ventile nur eingezeichnet, sofern diese geschlossen sind. Die Kammer 8 wird mit dem zweiten Medium 4 über- oder unterschichtet (Fig. 8c). Dabei sind die Ventilstellungen vorzugsweise so gewählt, dass der zweite Lyophilisatkörper 18 nicht gelöst werden kann. So sind insbesondere ein zweites Ventil 22 und ein drittes Ventil 23 geschlossen. Darauf folgend wird die Emulsion 6 erzeugt (Fig. 8d). Dazu sind das erste Ventil 21, das zweite Ventil 22, das dritte Ventil 23, ein viertes Ventil 24, ein fünftes Ventil 25 und ein sechstes Ventil 26 geschlossen. Anschließend kann die Phasenextraktion stattfinden, wodurch die Phasen wieder separiert werden (Fig. 8e). Die Lösung 7 kann dabei abgetrennt werden. Anschließend kann der zweite Lyophilisatkörper 18 analog zum ersten Lyophilisatkörper 17 verarbeitet werden (Fig. 8f). Es ist denkbar, die aus dem ersten Lyophilisatkörper 17 erhaltene Lösung 7 zuerst analytisch zu verarbeiten (z.B. mit einer Preamplifikation von DNA, oder mit einer Reverse Transkriptase) und in derselbe Lösung 7 (nach eventuellen mikrofluidschen Verdünnungen), den zweiten Lyophilisatkörper 18 mit neuem PCR-Material zu lösen.

## Patentansprüche

1. Verfahren zum Bereitstellen einer Lösung (7) einer Substanz in einer mikrofluidischen Vorrichtung (1), umfassend zumindest die folgenden Verfahrensschritte:
a) Bereitstellen einer mikrofluidischen Vorrichtung (1) und einer Dispersion (5) aus einem ersten Medium (3) und einem Lyophilisat (2) der Substanz, wobei das Lyophilisat (2) in dem ersten Medium (3) nicht lösbar ist,
b) Hinzufügen eines zweiten Mediums (4) zu der gemäß Schritt a) erhaltenen Dispersion (5), wobei das Lyophilisat (2) in dem zweiten Medium (4) lösbar ist,
c) Lösen des Lyophilisats (2) in dem zweiten Medium (4), so dass die Lösung (7) der Substanz in dem zweiten Medium (4) erhalten wird,
d) Trennen der gemäß Schritt c) erhaltenen Lösung (7) von dem ersten Medium (3).

2. Verfahren nach Anspruch 1, wobei in Schritt c) das zweite Medium (4) mit Dispersion (5) aus dem Lyophilisat (2) und dem ersten Medium (3) derart vermischt wird, dass eine Emulsion (6) gebildet wird, in der das Lyophilisat (2) durch das zweite Medium (4) gelöst wird, und wobei die Emulsion (6) aufgelöst wird, nachdem das Lyophilisat (2) in dem zweiten Medium (4) gelöst ist.

3. Verfahren nach Anspruch 2, wobei die mikrofluidische Vorrichtung (1) beim Auflösen der Emulsion (6) in Schritt c) derart orientiert ist, dass eine Unterseite (9) einer Kammer (8), in der die Emulsion (6) vorliegt, gegenüber einer horizontalen Ebene (10) verkippt ist.

4. Verfahren nach einem der Ansprüche 2 oder 3, wobei die Emulsion (6) gebildet wird, indem das zweite Medium (4) und die Dispersion (5) aus dem Lyophilisat (2) und dem ersten Medium (3) gemeinsam wiederholt zwischen mindestens zwei Mischkammern (13, 14) der mikrofluidischen Vorrichtung (1) verschoben werden.

5. Verfahren nach einem der Ansprüche 2 bis 4, wobei zur Bildung der Emulsion (6) eine Temperatur des zweiten Mediums (4) und der Dispersion (5) aus dem Lyophilisat (2) und dem ersten Medium (3) erhöht wird.

6. Verfahren nach einem der Ansprüche 2 bis 5, wobei zur Auflösung der Emulsion (6) eine Temperatur der Emulsion (6) abgesenkt wird.

7. Verfahren nach einem der vorhergehenden Ansprüche, wobei das Lyophilisat (2) in einer Vorhaltekammer (15) der mikrofluidischen Vorrichtung (1) vorgehalten wird, und wobei die Dispersion gemäß Schritt a) durch Zugabe des ersten Mediums (3) in die Vorhaltekammer (15) bereitgestellt wird.

8. Verfahren nach einem der vorhergehenden Ansprüche, wobei das Lyophilisat (2) zumindest zeitweise durch eine Strömung des ersten Mediums (3) innerhalb der mikrofluidischen Vorrichtung (1) bewegt wird.

9. Verfahren nach einem der vorhergehenden Ansprüche, wobei das Lyophilisat (2) durch eine Strömung des ersten Mediums (3) an eine Verengungsstelle (11, 19) einer Leitung (12) der mikrofluidischen Vorrichtung (1) bewegt und dort zumindest zeitweise gehalten wird.

10. Verfahren nach einem der vorhergehenden Ansprüche, wobei das Lyophilisat (2) in Schritt a) als eine Mehrzahl von Lyophilisatkörpern (17, 18) bereitgestellt wird, und wobei die Lyophilisatkörper (17, 18) zumindest zeitweise nacheinander oder gleichzeitig durch Einstellen einer jeweiligen Strömung des ersten Mediums (3) innerhalb der mikrofluidischen Vorrichtung (1) bewegt werden.

## Claims

1. Method for providing a solution (7) of a substance in a microfluidic device (1), comprising at least the following method steps:
a) providing a microfluidic device (1) and a dispersion (5) composed of a first medium (3) and a lyophilisate (2) of the substance, wherein the lyophilisate (2) is not dissolvable in the first medium (3),
b) adding a second medium (4) to the dispersion (5) obtained as per step a), wherein the lyophilisate (2) is dissolvable in the second medium (4),
c) dissolving the lyophilisate (2) in the second medium (4), with the result that the solution (7) of the substance in the second medium (4) is obtained,
d) separating the solution (7) obtained as per step c) from the first medium (3).

2. Method according to Claim 1, wherein the second medium (4) is mixed with dispersion (5) composed of the lyophilisate (2) and the first medium (3) in step c) such that an emulsion (6) in which the lyophilisate (2) is dissolved by the second medium (4) is formed and wherein the emulsion (6) is broken up after the lyophilisate (2) has been dissolved in the second medium (4).

3. Method according to Claim 2, wherein the microfluidic device (1) is oriented during the break-up of the emulsion (6) in step c) such that a bottom side (9) of a chamber (8) in which the emulsion (6) is present is tilted with respect to a horizontal plane (10).

4. Method according to either of Claims 2 and 3, wherein the emulsion (6) is formed by the second medium (4) and the dispersion (5) composed of the lyophilisate (2) and the first medium (3) being shifted together repeatedly between at least two mixing chambers (13, 14) of the microfluidic device (1) .

5. Method according to any of Claims 2 to 4, wherein a temperature of the second medium (4) and of the dispersion (5) composed of the lyophilisate (2) and the first medium (3) is increased to form the emulsion (6).

6. Method according to any of Claims 2 to 5, wherein a temperature of the emulsion (6) is lowered to break up the emulsion (6).

7. Method according to any of the preceding claims, wherein the lyophilisate (2) is kept available in a reservoir chamber (15) of the microfluidic device (1), and wherein the dispersion is provided as per step a) by addition of the first medium (3) to the reservoir chamber (15).

8. Method according to any of the preceding claims, wherein the lyophilisate (2) is moved at least temporarily by a flow of the first medium (3) within the microfluidic device (1).

9. Method according to any of the preceding claims, wherein the lyophilisate (2) is moved by a flow of the first medium (3) to a constriction site (11, 19) of a line (12) of the microfluidic device (1) and held there at least temporarily.

10. Method according to any of the preceding claims, wherein the lyophilisate (2) is provided in step a) as a plurality of lyophilisate bodies (17, 18), and wherein the lyophilisate bodies (17, 18) are moved at least temporarily in succession or at the same time by setting a respective flow of the first medium (3) within the microfluidic device (1).

## Revendications

1. Procédé de fourniture d'une solution (7) d'une substance dans un dispositif microfluidique (1), comprenant au moins les étapes de procédé suivantes :
a) la fourniture d'un dispositif microfluidique (1) et d'une dispersion (5) d'un premier milieu (3) et d'un lyophilisat (2) de la substance, le lyophilisat (2) n'étant pas soluble dans le premier milieu (3),
b) l'ajout d'un deuxième milieu (4) à la dispersion (5) obtenue selon l'étape a), le lyophilisat (2) étant soluble dans le deuxième milieu (4),
c) la dissolution du lyophilisat (2) dans le deuxième milieu (4) de manière à obtenir la solution (7) de la substance dans le deuxième milieu (4),
d) la séparation de la solution (7) obtenue selon l'étape c) du premier milieu (3).

2. Procédé selon la revendication 1, dans lequel, à l'étape c), le deuxième milieu (4) est mélangé avec une dispersion (5) du lyophilisat (2) et du premier milieu (3) de manière à former une émulsion (6) dans laquelle le lyophilisat (2) est dissous par le deuxième milieu (4), et dans lequel l'émulsion (6) est dissoute après que le lyophilisat (2) a été dissous dans le deuxième milieu (4).

3. Procédé selon la revendication 2, dans lequel, lors de la dissolution de l'émulsion (6) à l'étape c), le dispositif microfluidique (1) est orienté de telle sorte qu'un côté inférieur (9) d'une chambre (8) dans laquelle se trouve l'émulsion (6) est incliné par rapport à un plan horizontal (10).

4. Procédé selon l'une quelconque des revendications 2 ou 3, dans lequel l'émulsion (6) est formée en déplaçant de manière répétée le deuxième milieu (4) et la dispersion (5) du lyophilisat (2) et du premier milieu (3) ensemble entre au moins deux chambres de mélange (13, 14) du dispositif microfluidique (1).

5. Procédé selon l'une quelconque des revendications 2 à 4, dans lequel, pour la formation de l'émulsion (6), une température du deuxième milieu (4) et de la dispersion (5) du lyophilisat (2) et du premier milieu (3) est augmentée.

6. Procédé selon l'une quelconque des revendications 2 à 5, dans lequel une température de l'émulsion (6) est abaissée pour la dissolution de l'émulsion (6).

7. Procédé selon l'une quelconque des revendications précédentes, dans lequel le lyophilisat (2) est réservé dans une chambre de réserve (15) du dispositif microfluidique (1), et dans lequel la dispersion est fournie selon l'étape a) par ajout du premier milieu (3) dans la chambre de réserve (15).

8. Procédé selon l'une quelconque des revendications précédentes, dans lequel le lyophilisat (2) est déplacé au moins temporairement à l'intérieur du dispositif microfluidique (1) par un courant du premier milieu (3) .

9. Procédé selon l'une quelconque des revendications précédentes, dans lequel le lyophilisat (2) est déplacé par un courant du premier milieu (3) vers un point de rétrécissement (11, 19) d'une conduite (12) du dispositif microfluidique (1) et y est maintenu au moins temporairement.

10. Procédé selon l'une quelconque des revendications précédentes, dans lequel le lyophilisat (2) est fourni à l'étape a) sous la forme d'une pluralité de corps de lyophilisat (17, 18), et dans lequel les corps de lyophilisat (17, 18) sont déplacés au moins temporairement successivement ou simultanément à l'intérieur du dispositif microfluidique (1) par ajustement d'un courant respectif du premier milieu (3) .
